# EUROPÄISCHE PATENTANMELDUNG

(11) **EP 1 186 220 A2**
(43) Veröffentlichungstag der Anmeldung: **13.03.2002**
(21) Anmeldenummer: 01120538.2
(22) Anmeldetag: 29.08.2001
(51) Int. Cl.: A01C 15/12

(54) **Landwirtschaftliche Verteilmaschine**

(30) Priorität: 06.09.2000 DE 10043829; 06.09.2000 DE 10043832
(71) Anmelder: Amazonen-Werke H. Dreyer GmbH & Co. KG, 49205 Hasbergen (DE)
(72) Erfinder: Ehlen, Volker, 04229 Leipzig (DE); Kirsten, Eckart, 04205 Leipzig (DE); Oberheide, Friedrich, 49143 Bissendorf (DE)

(57) **Zusammenfassung**

Landwirtschaftliche Verteilmaschine mit einem Rahmen, Vorratsbehälter und Verteilergestänge, welches in eine Arbeitsstellung und in eine Transportstellung bringbar ist, wobei das Verteilergestänge sich in Transportstellung in Fahrtrichtung seitlich und/oder oberhalb des Vorratsbehälters erstreckt und sich auf Abstützvorrichtungen abstützt, wobei der Vorratsbehälter zumindest eine Abstützvorrichtung für das sich in Transportstellung befindliche Verteilergestänge aufweist. Die Abstützvorrichtung weist zumindest eine nach oben gerichtete Keilform weist. Das Verteilergestänge weist auf seiner dem Vorratsbehälter in Transportstellung zugewandten Seite zumindest ein schräg nach unten weisendes Auflageelement auf. Das Auflageelement ist auf die keilförmige Abstützvorrichtung auflegbar.

## Beschreibung

Der Erfindung betrifft eine landwirtschaftliche Verteilmaschine gemäß des Oberbegriffe der Patentansprüche 1 und 10.

Eine derartige landwirtschaftliche Verteilmaschine ist beispielsweise in dem Prospekt "BBG Anhänge-Feldspritzen S320 S330 S340 mit Druckvermerk 106/00 gezeigt. Das Verteilergestänge stützt sich in Transportstellung auf Abstützvorrichtungen ab, die an dem den Vorratsbehälter tragenden Rahmen befestigt sind. Es ist hier eine aufwendige Halterung zwischen dem Rahmen und der Abstützvorrichtung für das Verteilergestänge erforderlich.

Diese Abstützvorrichtungen weisen weiterhin eine horizontale Ablagefläche auf, auf welcher das Verteilergestänge, wenn es sich in Transportstellung befindet, aufgelegt wird. Diese Abstützvorrichtung ist seitlich etwas hochgebogen, damit das Verteilergestänge nicht nach außen rutscht. Weiterhin ist eine Verriegelung erforderlich, damit das Verteilergestänge aus dieser Ablegeposition während des Transportes nicht "herausspringt".

Der Erfindung liegt die Aufgabe zugrunde, eine wesentlich einfachere Ausbildung und Anordnung der Abstützvorrichtung für das sich in Transportstellung befindliche Verteilergestänge zu schaffen.

Diese Aufgabe wird erfindungsgemäß durch das kennzeichnende Merkmal des Patentanspruches 1 gelöst. Infolge dieser Maßnahmen ist die Abstützvorrichtung quasi Teil des Vorratsbehälters. Es ist keine gesonderte Verbindung bzw. Halterung zwischen dem Rahmen und der Abstützeinrichtung selbst erforderlich. Vielmehr wird die Wandung des Vorratsbehälters als Abstützvorrichtung selbst oder als Halterung, an welcher die Abstützvorrichtung befestigt ist, benutzt. Die Kräfte, die vom Verteilergestänge auf die Abstützvorrichtung einwirken, werden über den Vorratsbehälter in den Rahmen eingeleitet. Es besteht also keine gesonderte Verbindung zwischen dem Rahmen und der Abstützvorrichtung.

In einer Ausführungsform können die Abstützvorrichtungen am Vorratsbehälter befestigt bzw. angeordnet sein.

Weiterhin ist es möglich, dass der Vorratsbehälter als Abstützvorrichtung dienende Ausformungen aufweist, so dass die Hülle des Vorratsbehälters unmittelbar als Abstützvorrichtung dient. Hierbei können evtl.
Aufpolsterungen oder Verstärkungen in dem Bereich, der als Abstützvorrichtung vorgesehen ist, am oder in den Behälter integriert angeordnet sein.

Eine besonders vorteilhafte Ausgestaltung lässt sich dadurch erreichen, dass die Abstützvorrichtung in die Außenkontur des Vorratsbehälters durch Ausformungen integriert sind.

In einer Ausführungsform ist vorgesehen, dass die Abstützvorrichtungen an den oberen seitlichen Längsbereichen des Vorratsbehälters angeordnet sind. Hierdurch ergibt sich eine vorteilhafte Aufhängung und Abstützung des Verteilergestänges in der Transportstellung. Eine gute Zentrierung und sichere Auflage des Verteilergestänges in der Transportstellung lässt sich dadurch erreichen, dass die Abstützvorrichtung zumindest eine nach oben gerichtete Keilform aufweist. Damit das Verteilergestänge sicher auf der Abstützvorrichtung eingehängt werden kann, ist vorgesehen, dass das Verteilergestänge an seiner Oberseite und/oder seinem Seitenbereich auf seiner in Transportstellung dem Vorratsbehälter zugewandten Seite schräg nach unten weisende Auflageelemente aufweist, dass das Auflageelement auf die an dem Transportbehälter angebrachte keilförmige Abstützvorrichtung auflegbar ist. Hierdurch wird erreicht, dass die Abstützvorrichtung derart ausgebildet ist, dass sich das Gestänge selbständig zentriert und keine zusätzliche Sicherung gegen "herausspringen" während der Transportfahrt erforderlich ist.

Die Abstützvorrichtung kann sich über Teilbereiche oder die gesamte Länge des Vorratsbehälters erstrecken.

Kurz zusammengefasst, liegt der Erfindung die Idee zugrunde, den Vorratsbehälter selbst als Auflagevorrichtung für das sich in Transportstellung befindliche Verteilergestängen zu nutzen. Hierbei bestehen vielfältige Möglichkeiten, nämlich die Hülle des Behälters entsprechend als Auflagevorrichtung auszubilden oder an der Außenseite des Vorratsbehälters die Auflagevorrichtung mittels geeigneter Mittel zu befestigen.

Um einfach ausgebildete Abstützvorrichtung zu schaffen, welche eine zusätzliche Verriegelung in Transportstellung nicht erfordert, sind die kennzeichnenden Merkmale des Patentanspruches 10 vorgesehen. Infolge dieser Maßnahmen ergibt sich eine gute Zentrierung und sichere Auflage des Verteilergestänges in der Transportstellung. Damit das Verteilergestänge sicher auf der Abstützvorrichtung eingehängt werden kann, ist vorgesehen, dass das Verteilergestänge an seiner Oberseite und/oder seinem Seitenbereich auf seiner in Transportstellung dem Vorratsbehälter zugewandten Seite schräg nach unten weisende Auflageelemente aufweist, dass das Auflageelement auf die an dem Transportbehälter angebrachte keilförmige Abstützvorrichtung auflegbar ist. Hierdurch wird erreicht, dass die Abstützvorrichtung derart ausgebildet ist, dass sich das Gestänge selbständig zentriert und keine zusätzliche Sicherung gegen "herausspringen" während der Transportfahrt erforderlich ist.

Die Abstützvorrichtung kann sich über Teilbereiche oder die gesamte Länge des Vorratsbehälters erstrecken.

Weitere Einzelheiten der Erfindung sind der Beispielsbeschreibung und den Zeichnungen zu entnehmen.
Hierbei zeigen
- Fig. 1: die Verteilmaschine in der Ansicht von vorne,
- Fig. 2: die Verteilmaschine in perspektivischer Darstellung gemäß Fig. 1,
- Fig. 3: eine Gestängeabstützung in der Vorderansicht und
- Fig. 4: eine weitere Gestängeabstützung in der Vorderan sicht.

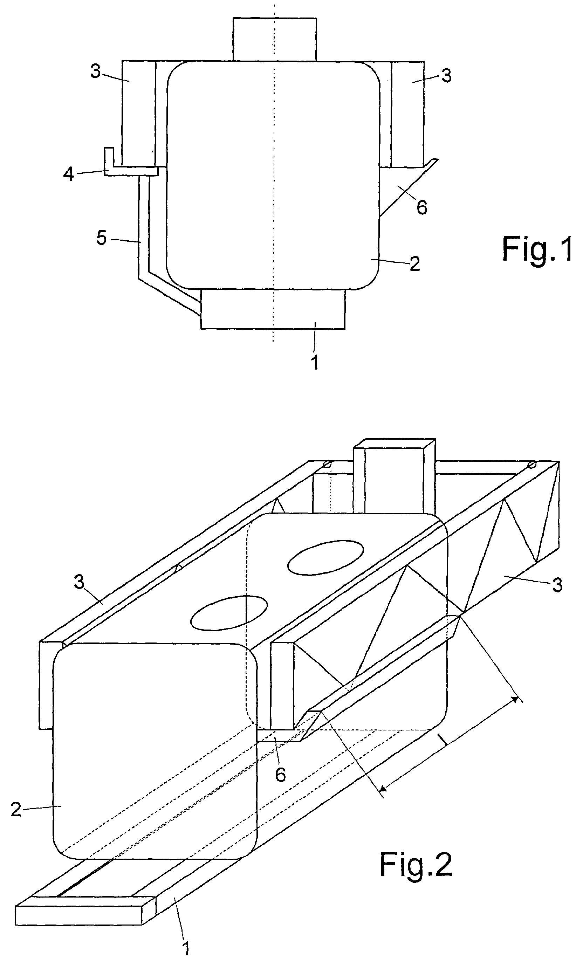

Die Fig. 1 und 2 zeigen auf ihrer linken Seite die bisherige Abstützung eines sich in Transportstellung befindlichen Verteilergestänges, während auf der rechten Seite eine erfindungsgemäße neue Abstützung dargestellt ist.

Auf dem Rahmen 1 einer Verteilmaschine ist der Vorratsbehälter 2 angeordnet. Dieser Rahmen 1 lässt sich auf ein Fahrgestell einer gezogenen Spritze und eines Selbstfahrers anordnen oder an dem Rahmen ist ein nicht dargestellter Dreipunktanbaurahmen anzubringen. In Transportstellung befindet sich das Verteilergestänge 3, wie die Fig. 1 und 2 zeigen seitlich und oberhalb des Vorratsbehälters 2.In der Transportstellung erstreckt sich das Verteilergestänge 3 in Fahrtrichtung. Auf der linken Seite ist eine herkömmliche Abstützvorrichtung 4 für das Verteilergestänge 3 gezeigt, wobei zwischen der Abstützvorrichtung 4 und dem Rahmen 1 die Halterung 5 angeordnet ist, die eine relativ große Länge aufweist und in manchen Fällen sehr kompliziert ausgebildet sein muss.

Auf der rechten Seite ist die erfindungsgemäße Abstützvorrichtung 6 gezeigt, die am Vorratsbehälter 2 angeordnet bzw. dort befestigt ist. Somit weist der Vorratsbehälter 2 unmittelbar die Abstützvorrichtung 6 für das sich in Transportstellung befindliche Verteilergestänge 3 auf. Es besteht also keine direkte Verbindung zwischen der Abstützvorrichtung 6 und dem Rahmen 1, sondern die Abstützvorrichtung 6 ist unmittelbar am Vorratsbehälter 2 befestigt, bzw. Teil davon. Hier ist die Abstützvorrichtung 6 im gezeigten Beispiel einstückig mit dem Vorratsbehälter verbunden und in die Außenkontur des Vorratsbehälters 2 durch Ausformungen integriert. Es ist jedoch auch möglich, dass die Abstützvorrichtung 6 mittels geeigneter Befestigungsmittel, wie beispielsweise Schrauben, Nieten oder mittels Klebeverbindung am Vorratsbehälter 2 befestigt wird. Gemäß den Fig. 1 und 2 befindet sich die Abstützvorrichtung 6 etwa auf halber Höhe des Vorratsbehälters 2. Wie Fig. 2 zeigt, weist die Abstützvorrichtung 6 eine Länge 1 auf, die in etwa der Länge des Vorratsbehälters 2 entspricht. Es ist auch möglich, die Abstützvorrichtung 6 kürzer auszubilden oder zwei Abstützvorrichtungen beabstandet in Längsrichtung gesehen anzuordnen hintereinander.

Es ist auch möglich, die Abstützvorrichtung, beispielsweise im oberen Bereich des Behälters direkt einzuformen, so dass das Verteilergestänge 6 sich dann auf den auf der Oberseite des Vorratsbehälters an dem Vorratsbehälter angeformten oder in dem Vorratsbehälter eingeformten Abstützvorrichtungen aufliegt. In manchen Fällen kann es sinnvoll sein, im Bereich der Abstützvorrichtungen Verstärkungen im oder am Behälter vorzusehen, um so eine ausreichende Stabilität des Vorratsbehälters und der Abstützvorrichtung zu erreichen. Auch kann es in nicht dargestellter Weise sinnvoll sein, Dämpfungsmaterialien auf der Auflagefläche der Abstützvorrichtung vorzusehen, um Beschädigungen des Vorratsbehälters zu vermeiden.

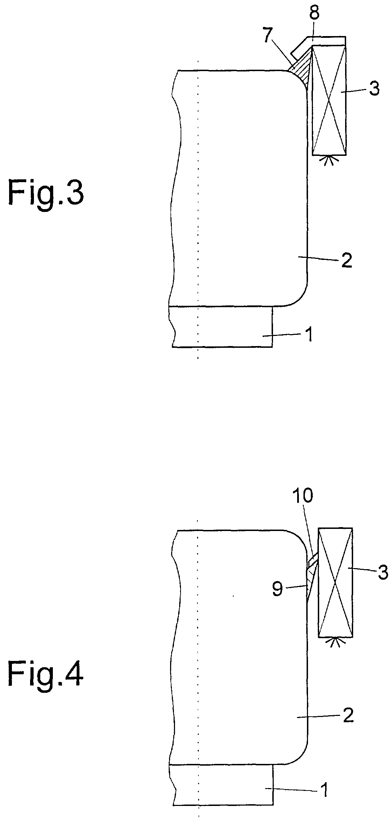

Gemäß Fig. 3 ist die Abstützvorrichtung 7 an dem oberen Längsbereich des Vorratsbehälters 2 angeordnet und weist eine nach oben gerichtete Keilform auf. Das Verteilergestänge 3 besitzt an seiner Oberseite auf seiner in Transportstellung dem Vorratsbehälter zugewandten Seite ein schräg nach unten weisendes Auflageelement 8. Dieses Auflageelement 8 ist auf die an dem Vorratsbehälter 2 angebrachte keilförmige Abstützvorrichtung 7 auflegbar. Hierdurch erfolgt automatisch eine Zentrierung des sich in Transportstellung befindlichen Verteilergestänges 3 in der Transportposition. Weiterhin ist dieser Auflagebereich derart ausgebildet, dass das Verteilergestänge 3 in seiner Transportstellung aus dieser gesicherten Position während der Transportfahrt nicht herausspringen kann.

Gemäß Fig. 4 ist die keilförmige Abstützvorrichtung 9 im Seitenbereich des Behälters ausgebildet. Hierbei weist das Verteilergestänge 3 etwa auf einem halben drittel seiner Höhe ein schräg nach unten weisendes Auflageelement 10 auf, welches mit der keilförmigen Abstützvorrichtung 10, die am Behälter 2 angeordnet ist, zusammenwirkt.

**[Stand der Technik]**

## Patentansprüche

1. Landwirtschaftliche Verteilmaschine mit einem Rahmen, Vorratsbehälter und Verteilergestänge, welches in eine Arbeitsstellung und in eine Transportstellung bringbar ist, wobei das Verteilergestänge sich in Transportstellung in Fahrtrichtung seitlich und/oder oberhalb des Vorratsbehälters erstreckt und sich auf Abstützvorrichtungen abstützt, **dadurch gekennzeichnet, dass** der Vorratsbehälter (2) zumindest eine Abstützvorrichtung (6,7,9) für das sich in Transportstellung befindliche Verteilergestänge (3) aufweist.

2. Verteilmaschine nach Anspruch 1, **dadurch gekennzeichnet, dass** die Abstützvorrichtungen am Vorratsbehälter angeordnet sind.

3. Verteilmaschine, nach Anspruch 1, **dadurch gekennzeichnet, dass** die Abstützvorrichtungen (6,7,9) am Vorratsbehälter (2) befestigt sind.

4. Verteilmaschine nach Anspruch 1, **dadurch gekennzeichnet, dass** der Vorratsbehälter (2) als Abstützvorrichtungen (6,7,9) dienende Ausformungen aufweist.

5. Verteilmaschine nach Anspruch 1, **dadurch gekennzeichnet, dass** die Abstützvorrichtungen (6,7,9) in die Außenkontur des Vorratsbehälters (2) durch Ausformungen integriert sind.

6. Verteilmaschine nach Anspruch 1, **dadurch gekennzeichnet, dass** die Abstützvorrichtungen (6,7,9) einstückig mit dem Vorratsbehälter (2) verbunden sind.

7. Verteilmaschine nach Anspruch 1, **dadurch gekennzeichnet, dass** die Abstützvorrichtung (7) an die oberen seitlichen Längsbereiche des Vorratsbehälters (2) angeordnet sind.

8. Vereilmaschine nach Anspruch 1, **dadurch gekennzeichnet, dass** die Abstützvorrichtungen (7,9) zumindest eine nach oben gerichtete Keilform aufweisen.

9. Verteilmaschine nach einem oder mehreren der vorstehend genannten Ansprüche, **dadurch gekennzeichnet, dass** das Verteilergestänge (3) an seiner Oberseite und/oder seinem Seitenbereich auf seiner in Transportstellung dem Vorratsbehälter (2) zugewandten Seite schräg nach unten weisende Auflageelemente (8,10) aufweist, dass das Auflageelement (8,10) auf die an dem Vorratsbehälter angebrachte keilförmige Abstützvorrichtung (7,9) auflegbar ist.

10. Landwirtschaftliche Verteilmaschine mit einem Rahmen, Vorratsbehälter und Verteilergestänge, welches in eine Arbeitsstellung und in eine Transportstellung bringbar ist, wobei das Verteilergestänge sich in Transportstellung in Fahrtrichtung seitlich und/oder oberhalb des Vorratsbehälters erstreckt und sich auf einer Abstützvorrichtung abstützt,
**dadurch gekennzeichnet, dass** die Abstützvorrichtung (7,9) zumindest eine nach oben gerichtete Keilform aufweist, dass das Verteilergestänge (3) auf seiner dem Vorratsbehälter (2) in Transportstellung zugewandten Seite zumindest ein schräg nach unten weisendes Auflageelement (8,10) aufweist, dass das Auflageelement (8,10) auf die keilförmige Abstützvorrichtung (4,6) auflegbar ist.

11. Verteilmaschine nach Anspruch 10, **dadurch gekennzeichnet, dass** das Ablageelement (8) an der Oberseite des Verteilergestänges (3) angeordnet ist.

12. Verteilmaschine nach Anspruch 10, **dadurch gekennzeichnet, dass** das Auflageelement (10) seitlich an dem Verteilergestänge (3) angeordnet ist.
